# EUROPEAN PATENT APPLICATION

(11) **EP 4 564 550 A1**
(43) Date of publication of application: **04.06.2025**
(21) Application number: 23919209.9
(22) Date of filing: 28.04.2023
(51) Int. Cl.: H01M 50/169, H01M 50/152

(54) **BATTERY, BATTERY MODULE AND ELECTRIC DEVICE**

(30) Priority: 31.01.2023 CN 202320185843 U; 31.01.2023 CN 202310099166
(71) Applicant: Eve Power Co., Ltd., Jingmen, Hubei 448000 (CN)
(72) Inventor: WANG, Zhiming, Jingmen, Hubei 448000 (CN); MIN, Changfei, Jingmen, Hubei 448000 (CN); LI, Shangyi, Jingmen, Hubei 448000 (CN); HUANG, Liming, Jingmen, Hubei 448000 (CN)
(74) Representative: Berggren Oy
(86) International application number: PCT/CN2023/091831
(87) International publication number: WO 2024/159641

(57) **Abstract**

The present application provides a battery, a battery module, and an electric device. The battery (1) includes a housing (10), a cell pack (20), and a cover plate assembly (30); the housing (10) includes a first port (11) and an accommodating cavity (12), and the cell pack (20) is disposed in the accommodating cavity (12); the cover plate assembly (30) is configured to seal the first port (11) of the housing (10) and includes a cover plate (31), and the cover plate (31) includes a positioning portion (31B) disposed at a side of the cover plate (31) close to the housing (10); and the cover plate (31) is welded to the housing (10) through the positioning portion (31B) to seal the first port (11) of the housing (10), thereby achieving full sealing of the cell pack (20).

## Description

### TECHNICAL FIELD

The present application relates to the field of battery, and in particular, to a battery, a battery module, and an electric device.

### BACKGROUND

Lithium ion battery technology is more and more widely used in energy fields such as 3C consumer electronics, power batteries, and energy storage. Lithium ion batteries can be divided into three categories according to the standard for the packaging housing, a stainless steel cylindrical battery, an aluminum or a stainless steel square battery, and a soft pack battery. The stainless steel cylindrical battery is obtained by assembling a stainless steel body and a cap, and the cap includes a sealing ring, a thermistor, an exhaust valve, and other components, which are often disposed in stack. Compared with the soft pack battery, the stainless steel cylindrical battery has a more compact structure, making the space utilization rate higher than that of the soft pack battery, thereby improving the energy density of the stainless steel cylindrical battery.

At present, batteries are generally sealed by a rolling groove or a rotary seal. In the processes, the sealing effect is achieved by compressing the sealing ring and using the rebound force of the sealing ring to fill the gap. However, the above processes have the following shortcomings. Firstly, the sealing ring will gradually age with the use of the battery; and secondly, the sealing ring, even compressed during the sealing process, occupies the internal space of the cell of the battery, which reduces the space utilization rate of the battery and makes it difficult to meet the development requirements for lightweight of the battery.

### SUMMARY

Embodiments of the present application provide a battery, a battery module, and an electric device to solve the above-mentioned problem(s).

To solve the above-mentioned problem(s), some embodiments of the present application provide technical solutions as follows.

In a first aspect, some embodiments of the present application provide a battery, including:
a housing including a first port and an accommodating cavity;
a cell pack disposed in the accommodating cavity; and
a cover plate assembly configured to seal the first port of the housing, in which the cover plate assembly includes a cover plate, the cover plate includes a positioning portion disposed at a side of the cover plate close to the housing, and the cover plate is welded to the housing through the positioning portion to seal the first port of the housing.

In some embodiments, the cover plate includes a cover plate main body and the positioning portion, the positioning portion is formed by extending the cover plate main body in a direction close to the housing, a side of the positioning portion close to the housing is lap-jointed with a side wall of the housing, and the positioning portion and the side wall of the housing are fixed by welding.

In some embodiments, the positioning portion includes a groove portion and a lap joint portion;
the groove portion is disposed between the lap joint portion and the cover plate main body, the groove portion is disposed inside the housing, and an opening of the groove portion is disposed on a side of the positioning portion away from the cell pack; and
the lap joint portion is formed by extending the groove portion in a direction close to the housing, the lap joint portion is lap-jointed with the side wall of the housing, and the lap joint portion and the side wall of the housing are fixed by welding.

In some embodiments, the housing has a thickness greater than or equal to 0.2 mm and less than or equal to 0.6 mm; the cover plate main body has a thickness greater than or equal to 0.3 mm and less than or equal to 0.8 mm; and the positioning portion has a height greater than or equal to 0.5 mm and less than or equal to 2.5 mm.

In some embodiments, the cover plate includes the cover plate main body and a molding member disposed at a side of the cover plate main body close to the cell pack, the molding member is concentrically formed with the cover plate main body, and a diameter of the molding member is smaller than a diameter of the cover plate main body, so that a stepped surface is formed on the cover plate, in which the stepped surface is the positioning portion.

In some embodiments, the molding member is an insulating member formed on the cover plate by injection molding, or the molding member is a metal plate welded to the cover plate main body.

In some embodiments, the housing has a thickness greater than or equal to 0.2 mm and less than or equal to 0.6 mm; the cover plate main body has a thickness greater than or equal to 0.3 mm and less than or equal to 0.8 mm; and the molding member has a thickness greater than or equal to 0.3 mm and less than or equal to 1.5 mm.

In some embodiments, the cover plate includes a cover plate main body and the positioning portion, the positioning portion is a groove structure, and an opening of the groove structure is disposed on a side of the positioning portion away from the cell pack; and
the groove structure includes a welding arm disposed at a side of the groove structure close to the housing, an extension direction of the welding arm is parallel to an extension direction of a side wall of the housing, and the welding arm and an inner wall of the housing are fixed by welding.

In some embodiments, the welding arm has a height greater than or equal to 0.5 mm and less than or equal to 2.5 mm.

In some embodiments, the battery further includes an insulating gasket disposed between the cell pack and the cover plate.

In some embodiments, the cover plate includes a cover plate main body and the positioning portion, the positioning portion includes a groove portion and a welding arm, a side of the groove portion is connected to the cover plate main body, and another side of the groove portion is connected to the welding arm.

In some embodiments, the groove portion includes an inclined side wall disposed at a side of the groove portion away from the cover plate main body, and the inclined side wall is connected to the welding arm.

In some embodiments, the housing has a thickness greater than or equal to 0.2 mm and less than or equal to 0.6 mm; the cover plate main body has a thickness greater than or equal to 0.3 mm and less than or equal to 0.8 mm; the groove portion has a depth greater than or equal to 0.5 mm and less than or equal to 2.5 mm; and the welding arm has a height greater than or equal to 0.2 mm and less than or equal to 1 mm.

In some embodiments, a thickness of the cover plate is greater than a thickness of the housing.

In some embodiments, the positioning portion includes a guiding surface disposed at a side of the positioning portion close to the housing.

In some embodiments, the battery further includes a pole post and a pole post through hole, and the pole post is disposed in the pole post through hole; the pole post through hole is disposed on the cover plate, or, the pole post through hole is disposed in a bottom of the battery facing the first port, and a center line of the pole post through hole coincides with a center line of the first port.

In some embodiments, the battery further includes a pole post, the pole post is disposed at the first port, or, the pole post is disposed at a bottom of the battery facing the first port; and
one of the housing, the cover plate, and the pole post is provided with a liquid injection hole.

In some embodiments, the liquid injection hole is disposed in the cover plate, and a center line of the liquid injection hole coincides with a center line of the first port; and
the cover plate assembly further includes a sealing sheet configured to seal the liquid injection hole, the sealing sheet includes a first sealing portion and a second sealing portion, the first sealing portion covers the liquid injection hole, the second sealing portion is disposed at a side of the first sealing portion away from the liquid injection hole and surrounds an outer periphery of the first sealing portion, and the second sealing portion and a side wall of the cover plate are fixed by welding.

In some embodiments, a forming method of the sealing sheet includes stamping forming or heading forming, and the first sealing portion and the second sealing portion are integrally formed.

In some embodiments, the cover plate is provided with a pole post through hole, and the pole post is disposed in the pole post through hole; and the pole post is provided with a liquid injection hole, a center line of the liquid injection hole coincides with a center line of the first port, and a center line of the pole post through hole coincides with the center line of the liquid injection hole.

In some embodiments, the pole post is further provided with an opening hole disposed on the liquid injection hole, an aperture of the opening hole is greater than an aperture of the liquid injection hole, and a center line of the opening hole coincides with the center line of the liquid injection hole; and
the cover assembly further includes a sealing sheet disposed in the hole, and a side wall of the sealing sheet and a side wall of the opening hole are fixed by welding.

In some embodiments, the housing has a thickness greater than or equal to 0.2 mm and less than or equal to 0.6 mm; the liquid injection opening hole has the aperture greater than or equal to 1.5 mm and less than or equal to 4 mm; the opening hole has the aperture greater than or equal to 2.5 mm and less than or equal to 5 mm, and the opening hole has a depth greater than or equal to 0.5 mm and less than or equal to 2 mm; the sealing sheet has a thickness greater than or equal to 0.5 mm and less than or equal to 2 mm; and the pole post has a thickness greater than or equal to 2 mm and less than or equal to 5 mm.

In some embodiments, a side of the sealing sheet away from the liquid injection hole is flush with a side of the pole post away from the cell pack.

In some embodiments, the pole post is further provided with a slot disposed at a side of the pole post close to the cover plate, the cover plate main body is disposed in the slot, and the slot is fixedly connected to the cover plate through a sealing ring.

In some embodiments, the housing has a thickness greater than or equal to 0.2 mm and less than or equal to 0.6 mm; the liquid injection hole has the aperture greater than or equal to 1.5 mm and less than or equal to 4 mm; the opening hole has the aperture greater than or equal to 5 mm and less than or equal to 15 mm; the sealing sheet has a thickness greater than or equal to 0.5 mm and less than or equal to 2 mm; the pole post has a thickness greater than or equal to 2 mm and less than or equal to 4 mm; and a side wall of the slot has a thickness greater than or equal to 0.5 mm and less than or equal to 2 mm.

In some embodiments, the battery further includes a current collecting plate disposed between the cell pack and the cover plate, and two sides of the current collecting plate are in contact with the cell pack and the cover plate, respectively.

In some embodiments, the current collecting plate and the positioning portion are fixed by welding.

In some embodiments, the current collecting plate has a thickness greater than or equal to 0.1 mm and less than or equal to 0.5 mm.

In some embodiments, the current collecting plate includes a current collecting plate main body and a connecting portion, and two sides of the current collecting plate main body are in contact with the cell pack and the positioning portion, respectively; the connecting portion is formed by extending the current collecting plate main body in a direction close to the housing, the connecting portion is disposed between the housing and the positioning portion and spaced apart from the positioning portion, and a side wall of the connecting portion and an inner wall of the housing are fixed by welding.

In some embodiments, the current collecting plate main body has a thickness greater than or equal to 0.1 mm and less than or equal to 0.5 mm, and the connecting portion has a height greater than or equal to 0.5 mm and less than or equal to 2 mm.

In a second aspect, some embodiments of the present application provide a battery module including a battery, the battery includes:
a housing including a first port and an accommodating cavity;
a cell pack disposed in the accommodating cavity; and
a cover plate assembly configured to seal the first port of the housing, in which the cover plate assembly includes a cover plate, the cover plate includes a positioning portion disposed at a side of the cover plate close to the housing, and the cover plate is welded to the housing through the positioning portion to seal the first port of the housing.

In a third aspect, some embodiments of the present application provide an electric device including the battery module as described above.

### BENEFICIAL EFFECTS

Embodiments of the present application provide a battery, a battery module, an electric device, a battery module, and an electric device. The battery includes a housing, a cell pack, and a cover plate assembly; the housing includes a first port and an accommodating cavity, and the cell pack is disposed in the accommodating cavity; and the cover plate assembly is configured to seal the first port of the housing and includes a cover plate, the cover plate includes a positioning portion disposed at a side of the cover plate close to the housing, and the cover plate is welded to the housing through the positioning portion to seal the first port of the housing. Compared with the sealing of the cell pack module by compressing a sealing ring and using the rebound force of the sealing ring in the prior art, the battery provided in the embodiments of the present application can ensure better sealing performance and improve the utilization rate of the internal space of the battery, thereby increasing the energy density of the battery.

### BRIEF DESCRIPTION OF THE DRAWINGS

In order to make technical solutions and beneficial effects of the present application obvious, embodiments of the present application will be described in detailed in combination with the drawings.
FIG. 1 is a schematic structural diagram of a battery provided in some embodiments of the present application.
FIG. 2 is a first schematic cross-sectional structural diagram of the battery provided in some embodiments of the present application.
FIG. 3 is a first schematic cross-sectional structural diagram at position A in FIG. 1.
FIG. 4 is a first schematic cross-sectional structural diagram at position B in FIG. 1.
FIG. 5 is a second schematic cross-sectional structural diagram at position B in FIG. 1.
FIG. 6 is a second schematic cross-sectional structural diagram at position A in FIG. 1.
FIG. 7 is a third schematic cross-sectional structural diagram at position A in FIG. 1.
FIG. 8 is fourth schematic cross-sectional structural diagram at position A in FIG. 1.
FIG. 9 is a second schematic cross-sectional structural diagram of the battery provided in some embodiments of the present application.
FIG. 10 is a first schematic cross-sectional structural at position C in FIG. 1.
FIG. 11 is a first schematic cross-sectional structural at position D in FIG. 1.
FIG. 12 is a second schematic cross-sectional structural at position C in FIG. 1.
FIG. 13 is a second schematic cross-sectional structural at position D in FIG. 1.

### DETAILED DESCRIPTION

The following will provide a clear and complete description of technical solutions in embodiments of the present application in combination with the drawings. Apparently, the described embodiments are only some embodiments of the present application, not all of them. Based on the embodiments of the present application, all other embodiments obtained by those skilled in the art without creative labor are in the scope of the present application.

The embodiments of the present application provide a battery, a battery module, and an electric device, which will be descried in detailed in the following. It should be noted that the order of the following embodiments is not intended to limit a preferred order of the embodiments.

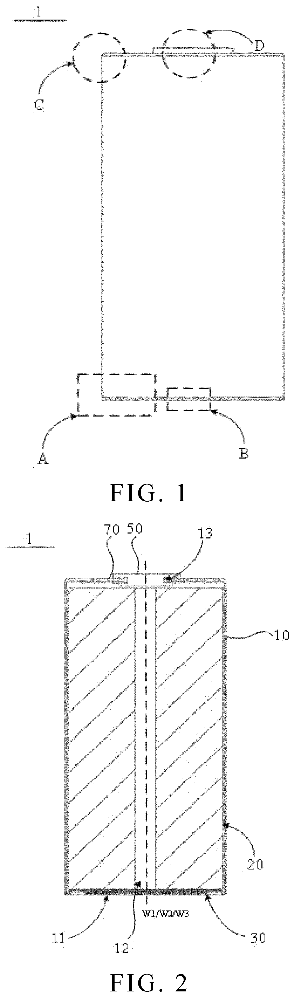

As illustrated in FIGs. 1 to 13, some embodiments of the present application provide a battery 1 including a housing 10, a cell pack 20, and a cover plate assembly 30. The housing 10 includes a first port 11 and an accommodating cavity 12, and the cell pack 20 is disposed in the accommodating cavity 12. The cover plate assembly 30 is configured to seal the first port 11 of the housing 10 and includes a cover plate 31. The cover plate 31 includes a positioning portion 31B disposed at a side of the cover plate 31 close to the housing 10. The cover plate 31 is welded to the housing 10 through the positioning portion 31B to seal the first port 11 of the housing 10.

It should be noted that, in related art, batteries are generally sealed by a rolling groove or a rotary seal. In the processes, the sealing effect is achieved by compressing the sealing ring and using the rebound force of the sealing ring to fill the gap. However, the above processes have the following shortcomings. Firstly, the sealing ring will gradually age with the use of the battery; and secondly, the sealing ring, even compressed during the sealing process, occupies the internal space of the cell of the battery, which reduces the space utilization rate of the battery and makes it difficult to meet the development requirements for lightweight of the battery.

It can be understood that, in the embodiments, the cover plate assembly includes the cover plate, and the cover plate includes the positioning portion disposed at a side of the cover plate close to the housing, so that the positioning of the cover plate in a radial direction before welding can be achieved through the positioning portion. Moreover, the positioning portion 31B and the housing are fixed by welding, achieving full sealing of the cell pack. Compared with the sealing of the cell pack 20 by compressing a sealing ring 70 and using the rebound force of the sealing ring 70 in the prior art, the battery 1 provided in the embodiments of the present application can ensure better sealing performance and improve the utilization rate of the internal space of the battery 1, thereby increasing the energy density of the battery 1.

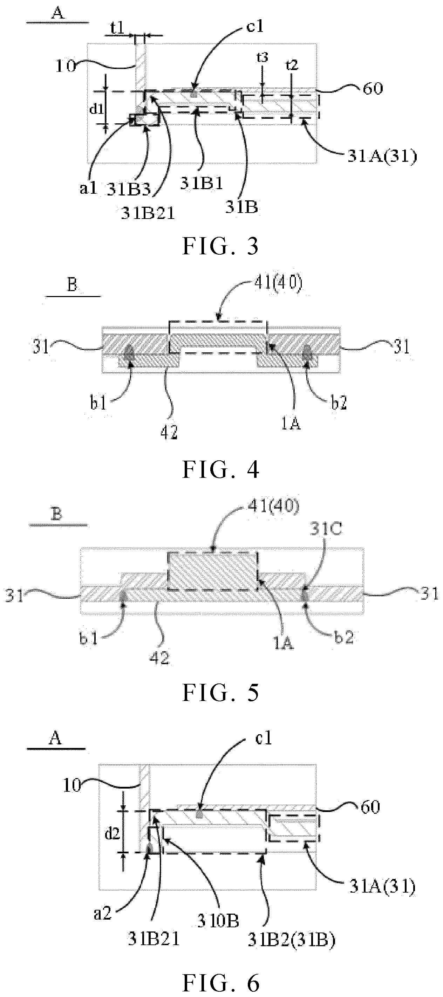

In some embodiments, as illustrated in FIGs. 1 to 5, FIG. 1 is a schematic structural diagram of a battery provided in some embodiments of the present application, FIG. 2 is a first schematic cross-sectional structural diagram of the battery provided in some embodiments of the present application, FIG. 3 is a first schematic cross-sectional structural diagram at position A in FIG. 1, FIG. 4 is a first schematic cross-sectional structural diagram at position B in FIG. 1, and FIG. 5 is a second schematic cross-sectional structural diagram at position B in FIG. 1.

In the embodiments, the cell pack 20 includes a main body portion (not shown in the figures), and a first tab and a second tab (not shown in the figures) respectively disposed at opposite two sides of the main body portion. Both of the first tab and the second tab are connected to the main body portion, and the first port 11 is disposed close to the second tab. Specifically, the first tab is disposed away from the first port 11 and the second tab is disposed close to the first port 11.

In the embodiments, the cover plate 31 includes a cover plate main body 31A and a positioning portion 31B, and the positioning portion 31B is formed by extending the cover plate main body 31A in a direction close to the housing 10. A side of the positioning portion 31B close to the housing 10 is lap-jointed with a side wall of the housing 10, and the positioning portion 31B and the side wall of the housing 10 are fixed by welding.

Furthermore, in the embodiments, the positioning portion 31B includes a groove portion 31B1 and a lap joint portion 31B3, and the groove portion 31B1 is disposed between the lap joint portion 31B3 and the cover plate main body 31A. The groove portion 31B1 is disposed inside the housing 10, and an opening of the groove portion 31B1 is disposed on a side of the positioning portion 31B away from the cell pack 20. The lap joint portion 31B3 is formed by extending the groove portion 31B1 in a direction close to the housing 10, the lap joint portion 31B3 is lap-jointed with the side wall of the housing 10, and the lap joint portion 31B3 and the side wall of the housing 10 are fixed by welding. Specifically, the lap joint portion 31B3 is formed by bending an end of the groove portion 31B1 away from the cover plate main body 31A in a direction close to the housing 10.

It can be understood that, the groove portion 31B1 can serve as a reinforcing rib structure of the positioning portion 31B, so as to enhance the strength of the positioning portion 31B, make the positioning portion 31B less prone to deformation or breakage, and increase the service life of the battery 1.

In the embodiments, the positioning portion 31B includes a guiding surface 31B21 disposed at a side of the groove portion 31B1 close to the housing 10. It can be understood that, in the embodiments, by disposing the positioning portion 31B including the guiding surface 31B21, when the cover plate 31 and the housing 10 are welded, the groove portion 31B1 can smoothly enter the housing 10 along the guiding surface 31B21, and the lap joint portion 31B3 can be lap-jointed on the housing 10, preventing the groove portion 31B1 from rigidly contacting the housing 10 when it enters the housing 10 without the guiding surface 31B21, which may produce metal scraps falling into the cell pack 20 under large friction and affect the cell pack 20. In the embodiments, an extension direction of the guiding surface 31B21 is parallel to an extension direction of the side wall of the housing 10.

In the embodiments, a mark a1 in FIG. 3 represents a welding point between the positioning portion 31B and the housing 10. It should be noted that the embodiments do not limit the welding method for the positioning portion 31B and the side wall of the housing 10. Preferably, the positioning portion 31B and the side wall of the housing 10 can be fixed and welded by a method combining seam welding and penetration welding.

It can be understood that, in the embodiments, the cover plate 31 includes the cover plate main body 31A and the positioning portion 31B, the positioning portion 31B is formed by extending the cover plate main body 31A in a direction close to the housing 10, and a side of the positioning portion 31B close to the housing 10 is lap-jointed with the side wall of the housing 10, so that the positioning of the cover plate 31 in a radial direction before welding can be achieved through the positioning portion 31B. Moreover, the positioning portion 31B includes the guiding surface 31B21 disposed at a side of the positioning portion 31B close to the housing 10, the guiding surface 31B21 can play a guiding role when the cover plate 31 is assembled with the housing 10, which facilitates the assembly of the cover plate 31 and saves cost. In addition, a side of the positioning portion 31B close to the housing 10 is connected to the side wall of the housing 10 in a lap joint form, and the positioning portion 31B and the side wall of the housing 10 are fixed by welding, improving assembly accuracy of the cover plate 31, simplifying loading and unloading operations, and improving stability of the operations.

It should be noted that, in the embodiments, the housing 10 has a thickness t1 greater than or equal to 0.2 mm and less than or equal to 0.6 mm; the cover plate main body 31At2 has a thickness greater than or equal to 0.3 mm and less than or equal to 0.8 mm; and the positioning portion 31Bd1 has a height greater than or equal to 0.5 mm and less than or equal to 2.5 mm.

In the embodiments, the thickness of the cover plate 31 is greater than the thickness of the housing 10, thereby enhancing strength of the cover plate 31, increasing structural stability of the cover plate 31, and avoiding fracture at the welding point between the housing 10 and the cover plate 31 when the pressure bearing capacity of the cover plate 31 is inferior to that of the side wall of the housing 10.

Furthermore, in the embodiments, the battery 1 further includes a current collecting plate 60 disposed between the cell pack 20 and the cover plate 31, and two sides of the current collecting plate 60 are in contact with the cell pack 20 and the cover plate 31, respectively.

Specifically, the battery 1 further includes a pole post 50, a pole post through hole 13, the current collecting plate 60, and a current collecting member. The pole post through hole 13 is disposed in a bottom of the battery 1 facing the first port 11. A center line W1 of the pole post through hole 13 coincides with a center line W2 of the first port 11. The accommodating cavity 12 is disposed between the first port 11 and the bottom of the battery 1. The pole post 50 is disposed in the pole post through hole 13, and the pole post 50 is fixedly connected to the housing 10 through a sealing ring 70. The current collecting member is disposed between the first tab and the pole post 50, two sides of the current collecting member are in contact with the first tab and the pole post 50, respectively, and the pole post 50 is electrically connected to the first tab through the current collecting member. The current collecting plate 60 is disposed between the second tab and the cover plate 31, and two sides of the current collecting plate 60 are in contact with the second tab and the cover plate 31, respectively. Shapes of the current collecting member and the current collecting plate 60 include, but not limited to a disc shape.

It should be noted that, the embodiments of the present application take the cell pack 20 being a lithium-ion cell pack 20, the first tab being a positive tab, the second tab being a negative tab, the current collecting plate 60 being a negative current collecting plate 60, the current collecting member being a positive current collecting plate 60, and the pole post 50 being a positive pole post 50 as examples for illustration.

In the embodiments, two sides of the current collecting plate 60 are in contact with the second tab and a bottom wall of the groove portion 31B1, respectively, and the current collecting plate 60 is closely attached to the groove portion 31B1. Furthermore, the current collecting plate 60 and the positioning portion 31B are fixed by welding. The current collecting plate 60 has a thickness t3 greater than or equal to 0.1 mm and less than or equal to 0.5 mm. Specifically, a side wall of the current collecting plate 60 and the bottom wall of the groove portion 31B1 are fixed by welding. It should be noted that, a mark c1 in FIG. 3 represents a welding point between the current collecting plate 60 and the groove portion 31B1. Therefore, by disposing the side wall of the current collecting plate 60 and the bottom wall of the groove portion 31B1 fixed by welding, the embodiments can enhance the structural stability, and ensures the sealing performance between the current collecting plate 60 and the cover plate 31.

Furthermore, in the embodiments, the cover plate 31 is provided with a liquid injection hole 1A, and a center line W3 of the liquid injection hole 1A coincides with the center line W2 of the first port 11. The cover plate assembly 30 further includes a sealing sheet 40 configured to seal the liquid injection hole 1A. A side of the sealing sheet 40 away from the liquid injection hole 1A and a side wall of the cover plate 31 are fixed by welding. A material of the housing 10, a material of the sealing sheet 40, and a material of the cover plate 31 include, but not limited to steel. In the embodiments, the material of the housing 10, the material of the sealing sheet 40, and the material of the cover plate 31 are preferably steel.

It can be understood that, in the embodiments, the material of the housing 10, the material of the sealing sheet 40, and the material of the cover plate 31 are preferably steel. Since the cover plate 31 and the housing 10 are fixed by welding, by setting the material of the cover plate 31 and the material of the housing 10 being the same, the melting point of the cover plate 31 can be approximately equal to the melting point of the housing 10, so as to achieve better fixation between the cover plate 31 and the housing 10 by welding. Moreover, since the sealing sheet 40 and the cover plate 31 are fixed by welding, by setting the material of the cover plate 31 and the material of the sealing sheet 40 being the same, the melting point of the cover plate 31 can be approximately equal to the melting point of the sealing sheet 40, so as to achieve better fixation between the cover plate 31 and the sealing sheet 40 by welding.

Specifically, the sealing sheet 40 includes a first sealing portion 41 and a second sealing portion 42. The first sealing portion 41 covers the liquid injection hole 1A, the second sealing portion 42 is disposed at a side of the first sealing portion 41 away from the liquid injection hole 1A and surrounds an outer periphery of the first sealing portion 41, and the second sealing portion 42 and the side wall of the cover plate 31 are fixed by welding, thereby achieving sealing of the liquid injection hole 1A.

It should be noted that, in the embodiments, a forming method of the sealing sheet 40 includes, but not limited to stamping forming or heading forming, and the first sealing portion 41 and the second sealing portion 42 are integrally formed. When the sealing sheet 40 is formed by stamping forming, a thickness of the first sealing portion 41 is equal to the thickness of the cover plate 31, so as to improve the sealing performance of the sealing sheet 40; as illustrated in FIG. 4, a mark b1 and a mark b2 in FIG. 4 represent two welding points between the sealing sheet 40 and the cover plate 31. When the sealing sheet 40 is formed by heading forming, the thickness of the first sealing portion 41 is greater than the thickness of the cover plate 31, the cover plate 31 is provided with an accommodating groove 31, and the second sealing portion 42 is disposed in the accommodating groove 31C and fixed to a side wall of the accommodating groove 31C by welding, which can increase the contact area between the sealing sheet 40 and the cover plate 31; as illustrated in FIG. 5, a mark b3 and a mark b4 in FIG. 5 represent two welding points between the sealing sheet 40 and the cover plate 31.

It can be understood that, in the embodiments, the sealing sheet 40 includes the first sealing portion 41 and the second sealing portion 42, the first sealing portion 41 covers the liquid injection hole 1A, the second sealing portion 42 is disposed at a side of the first sealing portion 41 away from the liquid injection hole 1A and surrounds an outer periphery of the first sealing portion 41, and the second sealing portion 42 and the side wall of the cover plate 31 are fixed by welding, so as to improve the sealing safety of the sealing member. Moreover, the first sealing portion 41 and the second sealing portion 42 are integrally formed, simplifying loading and unloading operations, improving structural stability, and reducing cost.

In some embodiments, as illustrated in FIG. 1 and FIG. 6, FIG. 6 is a second schematic cross-sectional structural diagram at position A in FIG. 1.

In the embodiments as illustrated in FIG. 6, the battery has a similar or same structure as the battery provided in the above-mentioned embodiments. The similar or same parts can refer to the description of the battery in the above-mentioned embodiments, and will not be repeated here. The differences will be described in the following.

In the embodiments, the cover plate 31 includes a cover plate main body 31A and a positioning portion 31B, the positioning portion 31B is a groove structure 31B2, and an opening of the groove structure 31B2 is disposed on a side of the positioning portion 31B away from the cell pack 20. The groove structure 31B2 includes a welding arm 310B disposed at a side of the groove structure 31B2 close to the housing 10. An extension direction of the welding arm 310B is parallel to the extension direction of the side wall of the housing 10, and the welding arm 310B and an inner wall of the housing 10 are fixed by welding.

In the embodiments, a surface of the welding arm 310B close to the housing 10 is a guiding surface 31B21 that is closely attached to the inner wall of the housing 10, and an extension direction of the guiding surface 31B21 is parallel to the extension direction of the side wall of the housing 10.

It can be understood that, in the embodiments, by disposing a surface of the welding arm 310B close to the housing 10 being the guiding surface 31B21, when the cover plate 31 and the housing 10 are welded, the groove structure 31B2 can smoothly enter the housing 10 along the guiding surface 31B21, so that a side wall of the welding arm 310B is closely attached to the inner wall of the housing 10, preventing the groove structure 31B2 from rigidly contacting the housing 10 when it enters the housing 10 without the guiding surface 31B21, which may produce metal scraps falling into the cell pack 20 under large friction and affect the cell pack 20. In the embodiments, the extension direction of the guiding surface 31B21 is parallel to the extension direction of the side wall of the housing 10.

Specifically, in the embodiments, the groove structure 31B2 is disposing protruding in a direction close to the current collecting plate 60, the extension direction of the welding arm 310B is parallel to the extension direction of the side wall of the housing 10, and the side wall of the welding arm 310B is closely attached to the inner wall of the housing 10, so as to increase a contact area between the cover plate 31 and the housing 10. Moreover, the welding arm 310B and the inner wall of the housing 10 are fixed by welding, improving the structural stability and ensuring the sealing performance between the housing 10 and the cover plate 31.

It should be noted that, in the embodiments, the welding arm 310B has a height d2 greater than or equal to 0.5 mm and less than or equal to 2.5 mm.

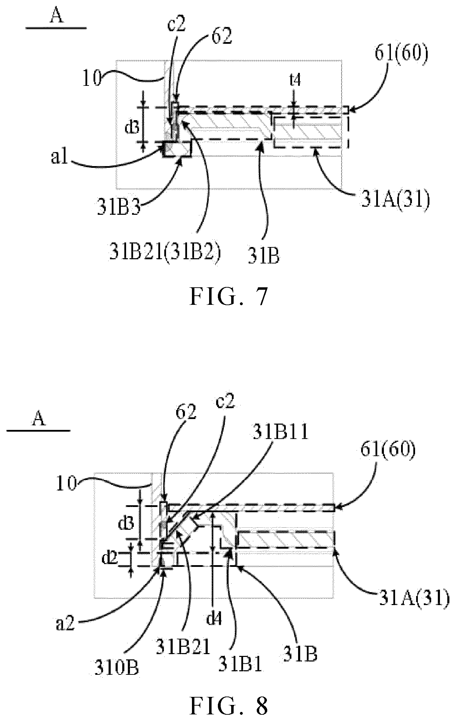

In some embodiments, as illustrated in FIG. 1 and FIG. 7, FIG. 7 is a third schematic cross-sectional structural diagram at position A in FIG. 1.

In the embodiments as illustrated in FIG. 7, the battery has a similar or same structure as the battery provided in the above-mentioned embodiments. The similar or same parts can refer to the description of the battery in the above-mentioned embodiments, and will not be repeated here. The differences will be described in the following.

In the embodiments, the current collecting plate 60 includes a current collecting plate main body 61 and a connecting portion 62. Two sides of the current collecting plate main body 61 are in contact with the cell pack 20 and the positioning portion 31B, respectively. The connecting portion 62 is formed by extending the current collecting plate main body 61 in a direction close to the housing 10. The connecting portion 62 is disposed between the housing 10 and the positioning portion 31B and spaced apart from the positioning portion 31B. A side wall of the connecting portion 62 and the inner wall of the housing 10 are fixed by welding. As illustrated in A FIG. 7, a mark c2 in FIG. 7 represents a welding point between the connecting portion 62 and the housing 10.

Specifically, in the embodiments, two sides of the current collecting plate main body 61 are in contact with the second tab and the groove portion 31B1, respectively, the connecting portion 62 is closely attached to the inner wall of the housing 10, and the connecting portion 62 is spaced apart from the guiding surface 31B21. It can be understood that, in the embodiments, the connecting portion 62 is formed by extending the current collecting plate main body 61 in a direction close to the housing 10, and the connecting portion 62 is disposed between the housing 10 and the positioning portion 31B, so that the connecting portion 62 can serve as a reinforcing rib structure for the current collecting plate 60, improving strength of the current collecting plate 60, reducing a risk of deformation or breakage of the current collecting plate 60, and increasing service life of the battery 1.

It should be noted that, in the embodiments, the current collecting plate main body 61 has a thickness t4 greater than or equal to 0.1 mm and less than or equal to 0.5 mm, and the connecting portion 62 has a height d3 greater than or equal to 0.5 mm and less than or equal to 2 mm.

In some embodiments, as illustrated in FIG. 1 and FIG. 8, FIG. 8 is a fourth schematic cross-sectional structural diagram at position A in FIG. 1.

In the embodiments as illustrated in FIG. 8, the battery has a similar or same structure as the battery provided in the above-mentioned embodiments. The similar or same parts can refer to the description of the battery in the above-mentioned embodiments, and will not be repeated here. The differences will be described in the following.

In the embodiments, the cover plate 31 includes a cover plate main body 31A and a positioning portion 31B, the positioning portion 31B includes a groove portion 31B1 and a welding arm 310B, a side of the groove portion 31B1 is connected to the cover plate main body 31A, and another side of the groove portion 31B1 is connected to the welding arm 310B.

Specifically, in the embodiments, the groove portion 31B1 includes an inclined side wall 31B11 disposed at a side of the groove portion 31B1 away from the cover plate main body 31A. The inclined side wall 31B11 is connected to the welding arm 310B, a side wall of the welding arm 310B is closely attached to the inner wall of the housing 10, and the welding arm and the inner wall of the housing 10 are fixed by welding. It should be noted that, in the embodiments, the guiding surface 31B21 is disposed on the inclined side wall 31B11, and a surface of the inclined side wall 31B11 close to the housing 10 is the guiding surface 31B21.

It can be understood that, in the embodiments, by disposing a surface of the inclined side wall 31B11 close to the housing 10 being the guiding surface 31B21, when the cover plate 31 and the housing 10 are welded, the groove portion 31B1 can smoothly enter the housing 10 along the guiding surface 31B21, and the side wall of the welding arm 310B can be closely attached to the inner wall of the housing 10, preventing the groove portion 31B1 from rigidly contacting the housing 10 when it enters the housing 10 without the guiding surface 31B21, which may produce metal scraps falling into the cell pack 20 under large friction and affect the cell pack 20. In the embodiments, an extension direction of the guiding surface 31B21 is parallel to the extension direction of the side wall of the housing 10.

In the embodiments, the connecting portion 62 has a height d3 greater than or equal to 0.5 mm and less than or equal to 2 mm; the groove portion 31B1 has a depth d4 greater than or equal to 0.5 mm and less than or equal to 2.5 mm; and the welding arm 310B has a height d2 greater than or equal to 0.2 mm and less than or equal to 1 mm.

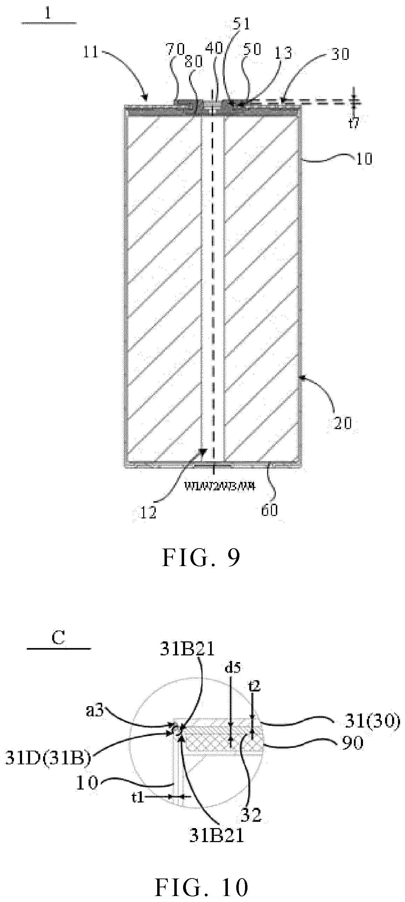

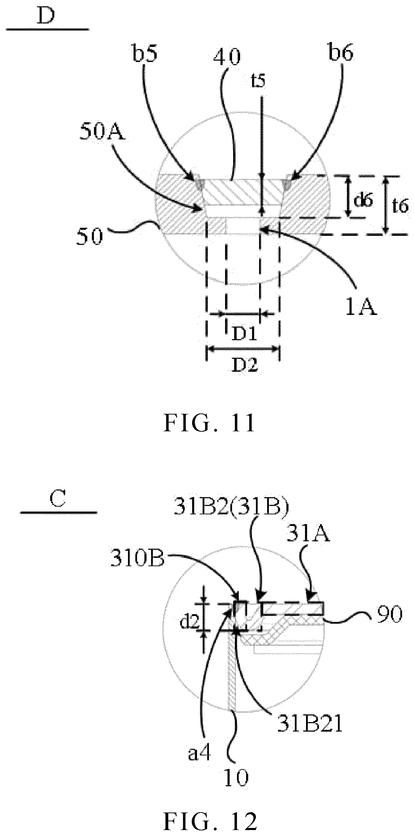

In some embodiments, as illustrated in FIG. 1, FIG. 9, FIG. 10, and FIG. 11, FIG. 9 is a second schematic cross-sectional structural diagram of a battery provided in some embodiments of the present application, FIG. 10 is a first schematic cross-sectional structural diagram at position C in FIG. 1, and FIG. 11 is a first schematic cross-sectional structural diagram at position D in FIG. 1.

In the embodiments, the cell pack 20 includes a main body portion (not shown in the figures), and a first tab and a second tab (not shown in the figures) respectively disposed at opposite two sides of the main body portion. Both of the first tab and the second tab are connected to the main body portion, and the first port 11 is disposed close to the second tab. Specifically, the first tab is disposed away from the first port 11 and the second tab is disposed close to the first port 11.

In the embodiments, the cover plate 31 includes a cover plate main body 31A and a positioning portion 31B, and the positioning portion 31B is formed by extending the cover plate main body 31A in a direction close to the housing 10. A side of the positioning portion 31B close to the housing 10 is lap-jointed with a side wall of the housing 10, and the positioning portion 31B and the side wall of the housing 10 are fixed by welding. Furthermore, the positioning portion 31B includes a guiding surface 31B21 disposed at a side of the positioning portion 31B close to the housing 10.

In the embodiments, the cover plate 31 includes the cover plate main body 31A and a molding member 32 disposed at a side of the cover plate main body 31A close to the cell pack 20. The molding member 32 is concentrically formed with the cover plate main body 31A, and a diameter of the molding member 32 is less than a diameter of the cover plate main body 31A, so as to form a stepped surface 31D on the cover plate 31, the stepped surface 31D is the positioning portion 31B. The molding member 32 and the cover plate main body 31A can be integrally formed, so as to simplify loading and unloading operations, improve structural firmness, and reduce cost.

It should be noted that, a mark a3 in FIG. 10 represents a welding point between the cover plate 31 and the housing 10. Moreover, in the embodiments, the guiding surface 31B21 is disposed at a side of the molding member 32 close to the housing 10.

It can be understood that, in the embodiments, by disposing the guiding surface 31B21 at a side of the molding member 32 close to the housing 10, when the cover plate 31 and the housing 10 are welded, the molding member 32 can smoothly enter the housing 10 along the guiding surface 31B21, so that the stepped surface 31D is lap-jointed on the housing 10, preventing the molding member 32 from rigidly contacting the housing 10 when it enters the housing 10 without the guiding surface 31B21, which may produce metal scraps falling into the cell pack 20 under large friction and affect the cell pack 20.

Specifically, in the embodiments, the molding member 32 is an insulating member formed on the cover plate 31 by injection molding. Alternatively, the molding member 32 is a metal plate, and the molding member 32 and the cover plate main body 31A are fixed by welding. When the molding member 32 is the insulating member formed on the cover plate 31 by injection molding, the molding member 32 can serve as an insulating member, so that the cover plate 31 and the cell pack 20 are insulated from each other.

When the molding member 32 is a metal plate, the molding member 32 and the cover plate main body 31A are fixed by welding. In the embodiments, the battery 1 further includes an insulating gasket disposed between the molding member 32 and the cell pack 20, so as to insulate the cover plate 31 from the cell pack 20. Moreover, setting the insulating gasket can avoid the occurrence of extrusion between the housing 10 and the cover plate 31 when the housing 10 and the cover plate 31 are welded, which may produce metal scraps falling into the battery and affect the stability of the cell pack 20.

It can be understood that, in the embodiments, the cover plate 31 includes the cover plate main body 31A and the molding member 32, the molding member 32 is disposed at a side of the cover plate main body 31A close to the cell pack 20 and concentrically formed with the cover plate main body 31A, and the diameter of the molding member 32 is less than the diameter of the cover plate main body 31A, so that the stepped surface 31D can be formed on the cover plate 31 and serve as the positioning portion 31B. The stepped surface 31D can accommodate the housing 10, thereby forming a positioning fit between the stepped surface 31D and the housing 10. In addition, the guiding surface 31B21 is disposed at a side of the molding member 32 close to the housing 10, the guiding surface 31B21 can play a guiding role when the cover plate 31 is assembled with the housing 10, so that the positioning of the cover plate 31 in a radial direction before welding can be achieved through the positioning portion 31B, which facilities the assembly of the cover plate 31 and saves cost. Moreover, a side of the positioning portion 31B close to the housing 10 is connected to the side wall of the housing 10 in a lap joint form, and the positioning portion 31B and the side wall of the housing 10 are fixed by welding, improving the assembly accuracy of the cover plate 31, simplifying the loading and unloading operations, and improving the stability of the operations.

It should be noted that, in the embodiments, the housing 10 has a thickness t1 greater than or equal to 0.2 mm and less than or equal to 0.6 mm; the cover plate main body 31At2 has a thickness greater than or equal to 0.3 mm and less than or equal to 0.8 mm; and the molding member 32 has a thickness d5 greater than or equal to 0.3 mm and less than or equal to 1.5 mm. Furthermore, a width of the positioning portion 31B is greater than or equal to the thickness of the housing 10. Preferably, the width of the positioning portion 31B is equal to the thickness of the housing 10.

In the embodiments, the battery 1 further includes a pole post 50, a pole post through hole 13, a current collecting plate 60, and a current collecting member. The pole post through hole 13 is disposed on the cover plate 31, and a center line W1 of the pole post through hole 13 coincides with the center line W2 of the first port 11. The pole post 50 is disposed in the pole post through hole 13, and the pole post 50 is fixedly connected to the cover plate 31 through a sealing ring 70. The current collecting member is disposed between the first tab and the pole post 50, two sides of the current collecting member are in contact with the first tab and the pole post 50, respectively, and the pole post 50 is electrically connected to the first tab through the current collecting member. The current collecting plate 60 is disposed between the second tab and a bottom of the battery 1 facing the first port 11. Shapes of the current collecting member and the current collecting plate 60 include, but not limited to a disc shape.

In the embodiments, the pole post 50 is provided with a slot 51, and the slot 51 is disposed at a side of the pole post 50 close to the cover plate 31. The cover plate main body 31A is disposed in the slot 51, and the slot 51 is fixedly connected to the cover plate 31 through the sealing ring 70. A side wall of the slot 51 has a thickness t7 greater than or equal to 0.5 mm and less than or equal to 2 mm.

It should be noted that, the embodiments of the present application take the cell pack 20 being a lithium-ion cell pack 20, the first tab being a positive tab, the second tab being a negative tab, the current collecting plate 60 being a negative current collecting plate 60, the current collecting member being a positive current collecting plate 60, and the pole post 50 being a positive pole post 50 as examples for illustration.

Furthermore, in the embodiments, the pole post through hole 13 is disposed on the cover plate 31, and the pole post 50 is disposed in the pole post through hole 13. The pole post 50 is further provided with a liquid injection hole 1A, a center line W3 of the liquid injection hole 1A coincides with the center line W2 of the first port 11, and the center line W1 of the pole post through hole 13 coincides with the center line W3 of the liquid injection hole 1A. Furthermore, the pole post 50 is further provided with an opening hole 50A disposed on the liquid injection hole 1A, an aperture of the opening hole 50A is greater than an aperture of the liquid injection hole 1A, and a center line W4 of the opening hole 50A coincides with the center line W3 of the liquid injection hole 1A.

Specifically, the cover plate assembly 30 further includes a sealing sheet 40 configured to seal the liquid injection hole 1A of the cover plate assembly 30. In the embodiments, the sealing sheet 40 is disposed in the opening hole 50A, and a side wall of the sealing sheet 40 and a side wall of the opening hole 50A are fixed by welding. As illustrated in FIG. 11, a mark b5 and a mark b6 in FIG. 11 represent two welding points between the sealing sheet 40 and the pole post 50.

It should be noted that, in the embodiments, a material of the housing 10, a material of the sealing sheet 40, and a material of the cover plate 31 include, but not limited to steel. Preferably, the material of the housing 10, the material of the sealing sheet 40, and the material of the cover plate 31 are steel.

It can be understood that, in the embodiments, the material of the housing 10, the material of the sealing sheet 40, and the material of the cover plate 31 are preferably steel. Since the cover plate 31 and the housing 10 are fixed by welding, by setting the material of the cover plate 31 and the material of the housing 10 being the same, the melting point of the cover plate 31 can be approximately equal to the melting point of the housing 10, so as to achieve better fixation between the cover plate 31 and the housing 10 by welding. Moreover, since the sealing sheet 40 and the cover plate 31 are fixed by welding, by setting the material of the cover plate 31 and the material of the sealing sheet 40 being the same, the melting point of the cover plate 31 can be approximately equal to the melting point of the sealing sheet 40, so as to achieve better fixation between the cover plate 31 and the sealing sheet 40 by welding. Moreover, in the embodiments, the sealing sheet 40 is disposed in the opening hole 50A, and the side wall of the sealing sheet 40 and the side wall of the pole post 50 are fixed by welding, simplifying the loading and unloading operations, improving the structural firmness, and reducing the cost.

It should be noted that, in the embodiments, the liquid injection hole 1A has an aperture D1 greater than or equal to 1.5 mm and less than or equal to 4 mm. Furthermore, the opening hole 50A includes a first opening and a second opening disposed between the first opening and the liquid injection hole 1A, and the second opening has an aperture D2 greater than or equal to 2.5 mm and less than or equal to 5 mm. The opening hole 50A has a depth d6 greater than or equal to 0.5 mm and less than or equal to 2 mm. The sealing sheet 40 has a thickness t5 greater than or equal to 0.5 mm and less than or equal to 2 mm. The pole post 50 has a thickness t6 greater than or equal to 2 mm and less than or equal to 5 mm.

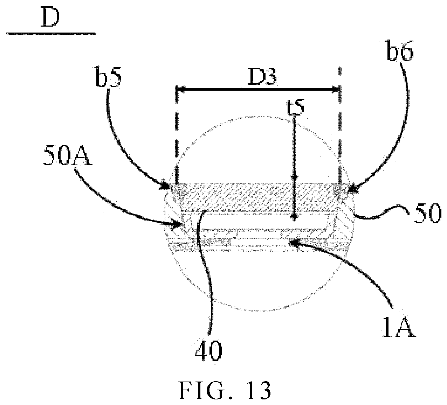

In some embodiments, as illustrated in FIG. 1, FIG. 12, and FIG. 13, FIG. 12 is a second schematic cross-sectional structural diagram at position C in FIG. 1, and FIG. 13 is a second schematic cross-sectional structural diagram at position D in FIG. 1.

In the embodiments as illustrated in FIG. 12 and FIG. 13, the battery has a similar or same structure as the battery provided in the above-mentioned embodiments. The similar or same parts can refer to the description of the battery in the above-mentioned embodiments, and will not be repeated here. The differences will be described in the following.

In the embodiments, the cover plate 31 includes a cover plate main body 31A and a positioning portion 31B, the positioning portion 31B is a groove structure 31B2, and an opening of the groove structure 31B2 is disposed on a side of the positioning portion 31B away from the cell pack 20. The groove structure 31B2 includes a welding arm 310B disposed at a side of the groove structure 31B2 close to the housing 10. An extension direction of the welding arm 310B is parallel to the extension direction of the side wall of the housing 10, and the welding arm 310B and the inner wall of the housing 10 are fixed by welding. As illustrated in FIG. 12, a mark a4 in FIG. 12 represents a welding point between the welding arm 310B and the housing 10.

In the embodiments, a surface of the welding arm 310B close to the housing 10 is a guiding surface 31B21 that is closely attached to the inner wall of the housing 10, and an extension direction of the guiding surface 31B21 is parallel to the extension direction of the side wall of the housing 10.

Specifically, in the embodiments, the groove structure 31B2 is disposing protruding in a direction close to the current collecting plate 60, the extension direction of the welding arm 310B is parallel to the extension direction of the side wall of the housing 10, and the side wall of the welding arm 310B is closely attached to the inner wall of the housing 10, so as to increase the contact area between the cover plate 31 and the housing 10. Moreover, the welding arm 310B and the inner wall of the housing 10 are fixed by welding, improving the structural stability and ensuring the sealing performance between the housing 10 and the cover plate 31.

It should be noted that, in the embodiments, a side of the sealing sheet 40 away from the liquid injection hole 1A is flush with a side of the pole post 50 away from the cell pack 20. The sealing sheet 40 has a thickness t5 greater than or equal to 0.5 mm and less than or equal to 2 mm. The pole post 50 has a thickness t6 greater than or equal to 2 mm and less than or equal to 4 mm. The welding arm 310B has a height d2 greater than or equal to 1 mm and less than or equal to 3 mm. The first opening has an aperture D2 greater than or equal to 2.5 mm.

It should be noted that the present application takes the liquid injection hole 1A being disposed in one of the cover plate 31 and the pole post 50 as an example for illustration. In some embodiments, the liquid injection hole 1A can be disposed in the housing 10, and the center line W3 of the liquid injection hole 1A is parallel to and spaced apart from the center line of the first port 11. That is, the present application does not limit the position of the liquid injection hole 1A.

Some embodiments of the present application further provide a battery module including the battery 1 described in any one of the above-mentioned embodiments.

It can be understood that the battery 1 has been described in detail in any one of the above-mentioned embodiments, which will not be repeated here.

In some embodiments of the present application, the battery module can be used in electric devices of various fields such as automobiles, aircraft, mechanical production equipment, and the like, to provide electrical energy for the electric devices and has strong practicality.

Some embodiments of the present application further provide an electric device including the battery module as described above, which can be used as a power supply for the electric device. Therefore, the electric device also has the beneficial effects of the battery module described above, which helps to simplify the overall structure of the electric device. For example, the electric device can be an automobile, an aircraft, a mechanical production equipment, or the like.

Based on the above, although the present application has provided preferred embodiments as described above, the preferred embodiments are not intended to limit the present application. Ordinary skilled in the art can make various changes and modifications without departing from the spirit and scope of the present application. Therefore, the scope of protection of the present application shall be subject to the scope defined by the claims.

## Claims

1. A battery (1) comprising:
a housing (10) comprising a first port (11) and an accommodating cavity (12);
a cell pack (20) disposed in the accommodating cavity (12); and
a cover plate assembly (30) configured to seal the first port (11) of the housing (10), wherein the cover plate assembly (30) comprises a cover plate (31), the cover plate (31) comprises a positioning portion (31B) disposed at a side of the cover plate (31) close to the housing (10), and the cover plate (31) is welded to the housing (10) through the positioning portion (31B) to seal the first port (11) of the housing (10).

2. The battery (1) of claim 1, wherein the cover plate (31) comprises a cover plate main body (31A) and the positioning portion (31B), wherein the positioning portion (31B) is formed by extending the cover plate main body (31A) in a direction close to the housing (10), a side of the positioning portion (31B) close to the housing (10) is lap-jointed with a side wall of the housing (10), and the positioning portion (31B) and the side wall of the housing (10) are fixed by welding.

3. The battery (1) of claim 2, wherein the positioning portion (31B) comprises a groove portion (31B1) and a lap joint portion (31B3);
the groove portion (31B1) is disposed between the lap joint portion (31B3) and the cover plate main body (31A), the groove portion (31B1) is disposed inside the housing (10), and an opening of the groove portion (31B1) is disposed on a side of the positioning portion (31B) away from the cell pack (20); and
the lap joint portion (31B3) is formed by extending the groove portion (31B1) in a direction close to the housing (10), the lap joint portion (31B3) is lap-jointed with the side wall of the housing (10), and the lap joint portion (31B3) and the side wall of the housing (10) are fixed by welding.

4. The battery (1) of claim 3, wherein the housing (10) has a thickness greater than or equal to 0.2 mm and less than or equal to 0.6 mm; the cover plate main body (31A) has a thickness greater than or equal to 0.3 mm and less than or equal to 0.8 mm; and the positioning portion (31B) has a height greater than or equal to 0.5 mm and less than or equal to 2.5 mm.

5. The battery (1) of claim 2, wherein the cover plate (31) comprises the cover plate main body (31A) and a molding member (32) disposed at a side of the cover plate main body (31A) close to the cell pack (20), the molding member (32) is concentrically formed with the cover plate main body (31A), and a diameter of the molding member (32) is smaller than a diameter of the cover plate main body (31A), so that a stepped surface (31D) is formed on the cover plate (31), wherein the stepped surface (31D) is the positioning portion (31B).

6. The battery (1) of claim 5, wherein the molding member (32) is an insulating member formed on the cover plate (31) by injection molding, or the molding member (32) is a metal plate welded to the cover plate main body (31A).

7. The battery (1) of claim 6, wherein the housing (10) has a thickness greater than or equal to 0.2 mm and less than or equal to 0.6 mm; the cover plate main body (31A) has a thickness greater than or equal to 0.3 mm and less than or equal to 0.8 mm; and the molding member (32) has a thickness greater than or equal to 0.3 mm and less than or equal to 1.5 mm.

8. The battery (1) of claim 1, wherein the cover plate (31) comprises a cover plate main body (31A) and the positioning portion (31B), wherein the positioning portion (31B) is a groove structure (31B2), and an opening of the groove structure (31B2) is disposed on a side of the positioning portion (31B) away from the cell pack (20); and
the groove structure (31B2) comprises a welding arm (310B) disposed at a side of the groove structure (31B2) close to the housing (10), an extension direction of the welding arm (310B) is parallel to an extension direction of a side wall of the housing (10), and the welding arm (310B) and an inner wall of the housing (10) are fixed by welding.

9. The battery (1) of claim 8, wherein the welding arm (310B) has a height greater than or equal to 0.5 mm and less than or equal to 2.5 mm.

10. The battery (1) of claim 8, wherein the battery (1) further comprises an insulating gasket disposed between the cell pack (20) and the cover plate (31).

11. The battery (1) of claim 1, wherein the cover plate (31) comprises a cover plate main body (31A) and the positioning portion (31B), wherein the positioning portion (31B) comprises a groove portion (31B1) and a welding arm (310B), a side of the groove portion (31B1) is connected to the cover plate main body (31A), and another side of the groove portion (31B1) is connected to the welding arm (310B).

12. The battery (1) of claim 11, wherein the groove portion (31B1) comprises an inclined side wall (31B11) disposed at a side of the groove portion (31B1) away from the cover plate main body (31A), and the inclined side wall (31B11) is connected to the welding arm (310B).

13. The battery (1) of claim 12, wherein the housing (10) has a thickness greater than or equal to 0.2 mm and less than or equal to 0.6 mm; the cover plate main body (31A) has a thickness greater than or equal to 0.3 mm and less than or equal to 0.8 mm; the groove portion (31B1) has a depth greater than or equal to 0.5 mm and less than or equal to 2.5 mm; and the welding arm (310B) has a height greater than or equal to 0.2 mm and less than or equal to 1 mm.

14. The battery (1) of any one of claims 1 to 13, wherein a thickness of the cover plate (31A) is greater than a thickness of the housing (10).

15. The battery (1) of any one of claims 1 to 13, wherein the positioning portion (31B) comprises a guiding surface (31B21) disposed at a side of the positioning portion (31B) close to the housing (10).

16. The battery (1) of any one of claims 1 to 13, wherein the battery (1) further comprises a pole post (50) and a pole post through hole (13), and the pole post (50) is disposed in the pole post through hole (13); wherein the pole post through hole (13) is disposed on the cover plate (31), or, the pole post through hole (13) is disposed in a bottom of the battery (1) facing the first port (11), and a center line of the pole post through hole (13) coincides with a center line of the first port (11).

17. The battery (1) of any one of claims 1 to 13, wherein the battery (1) further comprises a pole post (50), wherein the pole post (50) is disposed at the first port (11), or, the pole post (50) is disposed at a bottom of the battery (1) facing the first port (11); and
one of the housing (10), the cover plate (31), and the pole post (50) is provided with a liquid injection hole (1A).

18. The battery (1) of claim 17, wherein the liquid injection hole (1A) is disposed in the cover plate (31), and a center line of the liquid injection hole (1A) coincides with a center line of the first port (11); and
the cover plate assembly (30) further comprises a sealing sheet (40) configured to seal the liquid injection hole (1A), wherein the sealing sheet (40) comprises a first sealing portion (41) and a second sealing portion (42), the first sealing portion (41) covers the liquid injection hole (1A), the second sealing portion (42) is disposed at a side of the first sealing portion (41) away from the liquid injection hole (1A) and surrounds an outer periphery of the first sealing portion (41), and the second sealing portion (42) and a side wall of the cover plate (31) are fixed by welding.

19. The battery (1) of claim 18, wherein a forming method of the sealing sheet (40) includes stamping forming or heading forming, and the first sealing portion (41) and the second sealing portion (42) are integrally formed.

20. The battery (1) of claim 17, wherein the cover plate (31) is provided with a pole post through hole (13), and the pole post (50) is disposed in the pole post through hole (13); and the pole post (50) is provided with the liquid injection hole (1A), a center line of the liquid injection hole (1A) coincides with a center line of the first port (11), and a center line of the pole post through hole (13) coincides with the center line of the liquid injection hole (1A).

21. The battery (1) of claim 20, wherein the pole post (50) is further provided with an opening hole (50A) disposed on the liquid injection hole (1A), an aperture of the opening hole (50A) is greater than an aperture of the liquid injection hole (1A), and a center line of the opening hole (50A) coincides with the center line of the liquid injection hole (1A); and
the cover assembly (30) further comprises a sealing sheet (40) disposed in the opening hole (50A), and a side wall of the sealing sheet (40) and a side wall of the opening hole (50A) are fixed by welding.

22. The battery (1) of claim 21, wherein the housing (10) has a thickness greater than or equal to 0.2 mm and less than or equal to 0.6 mm; the liquid injection hole (1A) has the aperture greater than or equal to 1.5 mm and less than or equal to 4 mm; the opening hole (50A) has the aperture greater than or equal to 2.5 mm and less than or equal to 5 mm, and the opening hole (50A) has a depth greater than or equal to 0.5 mm and less than or equal to 2 mm; the sealing sheet (40) has a thickness greater than or equal to 0.5 mm and less than or equal to 2 mm; and the pole post (50) has a thickness greater than or equal to 2 mm and less than or equal to 5 mm.

23. The battery (1) of claim 21, wherein a side of the sealing sheet (40) away from the liquid injection hole (1A) is flush with a side of the pole post (50) away from the cell pack (20).

24. The battery (1) of claim 23, wherein the pole post (50) is further provided with a slot (51) disposed at a side of the pole post (50) close to the cover plate (31), the cover plate main body (31A) is disposed in the slot (51), and the slot (51) is fixedly connected to the cover plate (31) through a sealing ring (70).

25. The battery (1) of claim 24, wherein the housing (10) has a thickness greater than or equal to 0.2 mm and less than or equal to 0.6 mm; the liquid injection hole (1A) has the aperture greater than or equal to 1.5 mm and less than or equal to 4 mm; the opening hole (50A) has the aperture greater than or equal to 5 mm and less than or equal to 15 mm; the sealing sheet (40) has a thickness greater than or equal to 0.5 mm and less than or equal to 2 mm; the pole post (50) has a thickness greater than or equal to 2 mm and less than or equal to 4 mm; and a side wall of the slot (51) has a thickness greater than or equal to 0.5 mm and less than or equal to 2 mm.

26. The battery (1) of any one of claims 1 to 13, wherein the battery (1) further comprises a current collecting plate (60) disposed between the cell pack (20) and the cover plate (31), and two sides of the current collecting plate (60) are in contact with the cell pack (20) and the cover plate (31), respectively.

27. The battery (1) of claim 26, wherein the current collecting plate (60) and the positioning portion (31B) are fixed by welding.

28. The battery (1) of claim 27, wherein the current collecting plate (60) has a thickness greater than or equal to 0.1 mm and less than or equal to 0.5 mm.

29. The battery (1) of claim 26, wherein the current collecting plate (60) comprises a current collecting plate main body (61) and a connecting portion (62), and two sides of the current collecting plate main body (61) are in contact with the cell pack (20) and the positioning portion (31B), respectively; the connecting portion (62) is formed by extending the current collecting plate main body (61) in a direction close to the housing (10), the connecting portion (62) is disposed between the housing (10) and the positioning portion (31B) and spaced apart from the positioning portion (31B), and a side wall of the connecting portion (62) and an inner wall of the housing (10) are fixed by welding.

30. The battery (1) of claim 29, wherein the current collecting plate main body (61) has a thickness greater than or equal to 0.1 mm and less than or equal to 0.5 mm, and the connecting portion (62) has a height greater than or equal to 0.5 mm and less than or equal to 2 mm.

31. A battery module comprising a battery (1), wherein the battery (1) comprises:
a housing (10) comprising a first port (11) and an accommodating cavity (12);
a cell pack (20) disposed in the accommodating cavity (12); and
a cover plate assembly (30) configured to seal the first port (11) of the housing (10), wherein the cover plate assembly (30) comprises a cover plate (31), the cover plate (31) comprises a positioning portion (31B) disposed at a side of the cover plate (31) close to the housing (10), and the cover plate (31) is welded to the housing (10) through the positioning portion (31B) to seal the first port (11) of the housing (10).

32. An electric device comprising the battery module as claimed in claim 31.
